# EUROPÄISCHE PATENTSCHRIFT

(11) **EP 2 804 713 B1**
(45) Veröffentlichungstag und Bekanntmachung des Hinweises auf die Patenterteilung: **30.12.2015**
(21) Anmeldenummer: 13710775.1
(22) Anmeldetag: 18.01.2013
(51) Int. Cl.: B23B 51/02, B23B 31/11, F16B 7/18

(54) **HARTWERKSTOFF-GEWINDEVERBINDUNG**
HARD-MATERIAL THREADED CONNECTION
FILETAGE EN MATÉRIAU DUR

(30) Priorität: 20.01.2012 AT 212012
(43) Veröffentlichungstag der Anmeldung: 26.11.2014
(73) Patentinhaber: Ceratizit Austria Gesellschaft m.b.H., 6600 Reutte (AT)
(72) Erfinder: SINGER-SCHNÖLLER, Alexander, A-6671 Weißenbach (AT)
(74) Vertreter: Ciesla, Dirk
(86) Internationale Anmeldenummer: PCT/AT2013/000007
(87) Internationale Veröffentlichungsnummer: WO 2013/106875

(56) Entgegenhaltungen:
- DE-B- 1 151 774
- DE-B3- 10 302 873
- US-A- 3 782 848
- US-A1- 2002 168 239

## Beschreibung

Die vorliegende Erfindung betrifft eine Hartwerkstoff-Gewindeverbindung gemäß dem Anspruch 1, ein Verfahren gemäß dem Anspruch 10 zum Ausbilden einer Gewindeverbindung zwischen Hartwerkstoff und die Verwendung einer derartigen Hartwerkstoff-Gewindeverbindung gemäß dem Anspruch 13.

Insbesondere im Bereich der zerspanenden Bearbeitung metallischer Werkstücke ist es bekannt, Werkzeuge einzusetzen, die einen Werkzeugkörper und eine an dem Werkzeugkörper befestigte auswechselbare Schneide, insbesondere in Form eines Schneidkopfes, aufweisen. Die Schneide ist dabei üblicherweise aus einem Hartwerkstoff gefertigt und dazu ausgebildet, mit dem Werkstück zerspanend in Eingriff zu gelangen, wohingegen der Werkzeugkörper aus einem Material mit größerer Elastizität (verglichen mit dem Hartwerkstoff), wie z.B. aus einem Stahl, gebildet ist und den Schneidkopf mit anderen Komponenten einer Bearbeitungsmaschine verbindet. In diesem Fall bildet der Werkzeugkörper bzw. ein mit dem Werkzeugkörper verbundener Gewindekörper eine Komponente mit größerer Elastizität und der Schneidkopf ist ein Bauteil, das einen Hartwerkstoff aufweist.

Im Rahmen der vorliegenden Umschreibung umfasst der Begriff Hartwerkstoff Hartmetalle, Cermets und Schneidkeramiken. Unter Schneidkeramiken werden dabei Keramiken verstanden, die bei einer zerspanenden Metallbearbeitung zum Einsatz kommen, insbesondere kubisches Bornitrid und polykristalliner Diamant. Unter Hartmetall (auch als "cemented carbide" bezeichnet) wird vorliegend ein Material verstanden, bei dem harte Metallkarbide in einer metallischen Matrix (Binder) eingebettet sind. Die Metallkarbide können dabei insbesondere durch Karbide bzw. Mischkarbide der Metalle der Gruppen IV bis VI des Periodensystems der Elemente gebildet sein, insbesondere z.B. durch Karbide oder Mischkarbide der Metalle W, Ti, Zr, Hf, V, Nb, Ta, Mo und Cr. Die metallische Matrix kann z.B. insbesondere durch Co, Ni und/oder Fe gebildet sein. Es können auch Zusätze von weiteren Hartstoffen vorhanden sein. Unter Cermet wird ein Material verstanden, bei dem keramische Partikel, die insbesondere durch Karbooxide, Oxide, Boride oder Karbide gebildet sein können, in einer metallischen Matrix eingebettet sind. Die metallische Matrix kann dabei insbesondere Kobalt (Co), Wolfram (W), Molybdän (Mo), Niob (Nb), Titan (Ti), Zirkonium (Zr), Chrom (Cr) und/oder Nickel (Ni) aufweisen.

Es ist beispeislweise der US 2002/168 239 A1 bekannt, Bauteile, die einen Hartwerkstoff aufweisen bzw. aus Hartwerkstoff gebildet sind, über eine Gewindeverbindung mit der Komponente zu verbinden, die eine größere Elastizität aufweist. Dabei ist das Hartwerkstoff-Bauteil mit einem ersten Gewindeabschnitt versehen, der üblicherweise (aber nicht zwingend) durch ein Innengewinde gebildet ist, und die Komponente mit größerer Elastizität ist mit einem korrespondierenden zweiten Gewindeabschnitt versehen, der dementsprechend üblicherweise durch ein Außengewinde gebildet ist. Die Gewindeverbindung ist dabei, insbesondere in dem Fall eines rotierenden Werkzeugs, derart ausgebildet, dass sie bei einem Einsatz des Werkzeugs in einer Richtung belastet wird, die die Gewindeverbindung eher weiter zuschraubt, sodass ein unerwünschtes Lösen der Gewindeverbindung in Form eines Losdrehens nicht zu befürchten ist. Bei den zum Einsatz kommenden Gewindeverbindungen handelt es sich um Normgewinde, wie z.B. metrische ISO-Gewinde.

Es tritt in der Praxis das Problem auf, dass u.a. bedingt durch die unterschiedlichen Materialeigenschaften des Hartwerkstoffs und des Materials der Komponente mit der größeren Elastizität ein Versagen des Gewindeabschnitts an dem Hartwerkstoff-Bauteil auftreten kann. Es kommt insbesondere vor, dass Gewindegänge ausreißen oder ringförmige Abplatzungen oder Risse in dem Bauteil aus Hartwerkstoff auftreten. Es ist Aufgabe der vorliegenden Erfindung, eine verbesserte Hartwerkstoff-Gewindeverbindung, ein verbessertes Verfahren zum Ausbilden einer Gewindeverbindung zwischen Hartwerkstoff und einer Komponente mit größerer Elastizität und eine verbesserte Verwendung einer Hartwerkstoff-Gewindeverbindung bereitzustellen, die das Problem eines Versagens des in dem Hartwerkstoff ausgebildeten Gewindeabschnitts beheben oder zumindest verringern. Die Aufgabe wird durch eine Hartwerkstoff-Gewindeverbindung nach Anspruch 1 gelöst. Vorteilhafte Weiterbildungen sind in den abhängigen Ansprüchen angegeben.

Die Hartwerkstoff-Gewindeverbindung weist ein Bauteil, das einen Hartwerkstoff und einen in dem Hartwerkstoff ausgebildeten ersten Gewindeabschnitt aufweist, und eine Komponente mit größerer Elastizität, die einen mit dem ersten Gewindeabschnitt zusammenwirkenden, zweiten Gewindeabschnitt aufweist, auf. Der erste Gewindeabschnitt und der zweite Gewindeabschnitt weisen eine unterschiedliche Gewindesteigung auf. Das Bauteil und die Komponente können insbesondere Bestandteile eines Werkzeugs, insbesondere zur zerspanenden Bearbeitung, sein. Das Bauteil kann dabei insbesondere durch eine Schneide, insbesondere einen Schneidkopf, gebildet sein und die Komponente mit größerer Elastizität durch einen Werkzeugkörper oder durch einen mit einem Werkzeugkörper verbundenen Gewindekörper. Durch das Ausbilden des ersten Gewindeabschnitts und des zweiten Gewindeabschnitts mit unterschiedlichen Gewindesteigungen kann in einfacher Weise in der Hartwerkstoff-Gewindeverbindung eine Lastverteilung erzielt werden, mit der ein Versagen des in dem Hartwerkstoff ausgebildeten ersten Gewindeabschnitts verhindert wird.

Gemäß einer Ausgestaltung beträgt der Unterschied in der Gewindesteigung mehr als 1,5 %, bevorzugt mehr als 2 %. In diesem Fall kann ein Versagen des in dem Hartwerkstoff ausgebildeten ersten Gewindeabschnitts besonders zuverlässig verhindert werden. Bevorzugt beträgt der Unterschied in der Gewindesteigung zwischen 2,1 % und 8 %. Bei einem zu geringen Unterschied in der Gewindesteigung wird der gewünschte Effekt nicht in ausreichendem Maße erreicht. Andererseits ist bei einem zu großen Unterschied bereits das Zusammenschrauben nicht mehr ermöglicht und es kann bereits beim Zusammenschrauben zu einer Beschädigung der Gewindegänge kommen. Es ist zu beachten, dass der Unterschied in der Gewindesteigung bei einer höheren Anzahl ineinander eingreifender, lasttragender Gewindegänge, d.h. bei einer längeren Hartwerkstoff-Gewindeverbindung, geringer sein kann, als bei einer kürzeren Hartwerkstoff-Gewindeverbindung, bei der nur wenige Gewindegänge ineinander eingreifen.

Gemäß einer Ausgestaltung ist der erste Gewindeabschnitt, der in dem Hartwerkstoff ausgebildet ist, ein Innengewinde. Insbesondere in diesem Fall ist das Risiko eines Versagens des in dem Hartwerkstoff ausgebildeten Gewindeabschnitts sehr ausgeprägt und kann durch die vorgeschlagene Realisierung effizient verringert werden.

Gemäß einer Ausgestaltung weist der als Innengewinde ausgebildete Gewindeabschnitt eine größere Steigung auf, als der als Außengewinde ausgebildete Gewindeabschnitt. Mit dieser Realisierung wird eine Kraftverteilung erzielt, bei der zunächst überwiegend Gewindegänge nahe einem freien Ende des Außengewindes zugbelastet werden und erst bei zunehmender Last weiter von dem freien Ende entfernte Gewindegänge. Als Folge ist eine deutlich erhöhte Belastung des Gewindes ermöglicht, ohne dass ein Versagen des in dem Hartwerkstoff ausgebildeten Gewindes auftritt. Insbesondere wenn der in dem Hartwerkstoff ausgebildete Gewindeabschnitt als Innengewinde ausgebildet ist, ermöglicht dies ferner eine kostengünstige Verwendung eines Standardbauteils mit einem Normgewinde für die Komponente mit größerer Elastizität.

Gemäß einer Ausgestaltung ist der zweite Gewindeabschnitt ein Normgewinde und der erste Gewindeabschnitt weist eine von der Norm abweichende Gewindesteigung auf. In diesem Fall ist eine besonders effiziente und kostengünstige Realisierung ermöglicht. Der erste Gewindeabschnitt kann dabei insbesondere um mehr als 1,5 %, bevorzugt um mehr als 2 %, mehr bevorzugt um zwischen 2,1 % und 8 % von der Norm abweichen. Die weiteren Parameter des ersten Gewindeabschnitts können bevorzugt normgemäß ausgeführt sein, sodass der erste Gewindeabschnitt nur in der Steigung von der Norm abweicht.
Gemäß einer Ausgestaltung ist der als Innengewinde ausgebildete Gewindeabschnitt derart mit einer Ansenkung versehen, dass das Innengewinde gegenüber einer Oberfläche vertieft angesetzt ist. In diesem Fall ist durch das vertiefte Ansetzen des Innengewindes die Gefahr eines Versagens dieses Gewindeabschnitts weiter reduziert.

Bevorzugt ist das Bauteil, das den Hartwerkstoff aufweist, eine auswechselbare Schneide, insbesondere ein Schneidkopf. Das Bauteil kann dabei insbesondere eine Schneide für eine zerspanende Bearbeitung sein. Insbesondere bei derartigen Bauteilen ist die Gefahr eines Versagens der Hartwerkstoff-Gewindeverbindung aufgrund der unterschiedlichen Elastizitäten der Materialien besonders ausgeprägt.

Gemäß einer Ausgestaltung ist der Hartwerkstoff Hartmetall oder Cermet. Insbesondere bei diesen Werkstoffen kommt häufig eine Hartwerkstoff-Gewindeverbindung zum Einsatz und ein Versagen eines in dem Hartwerkstoff ausgebildeten Gewindeabschnitts muss vermieden werden. Es ist jedoch auch möglich, dass eine Schneidkeramik als Hartwerkstoff zum Einsatz kommt.

Die Aufgabe wird auch durch ein Verfahren zum Ausbilden einer Gewindeverbindung zwischen Hartwerkstoff und einer Komponente mit größerer Elastizität nach Anspruch 10 gelöst. Vorteilhafte Weiterbildungen sind in den abhängigen Ansprüchen angegeben.

Das Verfahren weist auf: Verschrauben eines Bauteils, das einen Hartwerkstoff und einen in dem Hartwerkstoff ausgebildeten ersten Gewindeabschnitt aufweist, mit einer Komponente mit größerer Elastizität, die einen zweiten Gewindeabschnitt aufweist, der mit dem ersten Gewindeabschnitt unter Ausbildung einer Gewindeverbindung zusammenwirkt. Der erste Gewindeabschnitt und der zweite Gewindeabschnitt weisen eine unterschiedliche Gewindesteigung auf. Durch das Verschrauben des ersten Gewindeabschnitts und des zweiten Gewindeabschnitts mit unterschiedlichen Gewindesteigungen wird in einfacher Weise in der Hartwerkstoff-Gewindeverbindung eine Lastverteilung erzielt, mit der ein Versagen des in dem Hartwerkstoff ausgebildeten ersten Gewindeabschnitts verhindert wird.

Gemäß einer Ausgestaltung ist der erste Gewindeabschnitt ein Innengewinde und der zweite Gewindeabschnitt ein Außengewinde. Insbesondere in diesem Fall ist das Risiko eines Versagens des in dem Hartwerkstoff ausgebildeten Gewindeabschnitts sehr ausgeprägt und kann durch die vorgeschlagene Realisierung effizient verringert werden.

Gemäß einer Ausgestaltung ist der zweite Gewindeabschnitt ein Normgewinde und der erste Gewindeabschnitt weist eine von der Norm abweichende Gewindesteigung auf. In diesem Fall kann für die Komponente mit größerer Elastizität eine Standard-Komponente mit einem Normgewinde als zweitem Gewindeabschnitt zum Einsatz kommen. Dies ist vorteilhaft, da in dem Hartwerkstoff der erste Gewindeabschnitt üblicherweise separat auszubilden ist.

Die Aufgabe wird auch durch eine Verwendung der zuvor angegebenen Hartwerkstoff-Gewindeverbindung gemäß Anspruch 13 gelöst. Es handelt sich um eine Verwendung zur Befestigung einer Schneide, insbesondere eines Schneidkopfes, an einem Werkzeugkörper.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine teilgeschnittene Ansicht eines Werkzeugs mit einer Hartwerkstoff-Gewindeverbindung gemäß einer Ausführungsform;
- Fig. 2:: eine Aufsicht auf das Werkzeug von Fig. 1;
- Fig. 3:: eine vergrößerte teilgeschnittene Detailansicht der Hartwerkstoff-Gewindeverbindung bei dem Werkzeug von Fig. 1;
- Fig. 4:: eine stärker vergrößerte teilgeschnittene Detailansicht der Gewindeabschnitte bei der Hartwerkstoff-Gewindeverbindung;
- Fig. 5:: eine graphische Darstellung zur Erläuterung der Lastverteilung bei der Hartwerkstoff-Gewindeverbindung im Vergleich mit einer herkömmlichen Hartwerkstoff-Gewindeverbindung; und
- Fig. 6:: eine teilgeschnittene Detailansicht einer herkömmlichen Hartwerkstoff-Gewindeverbindung.

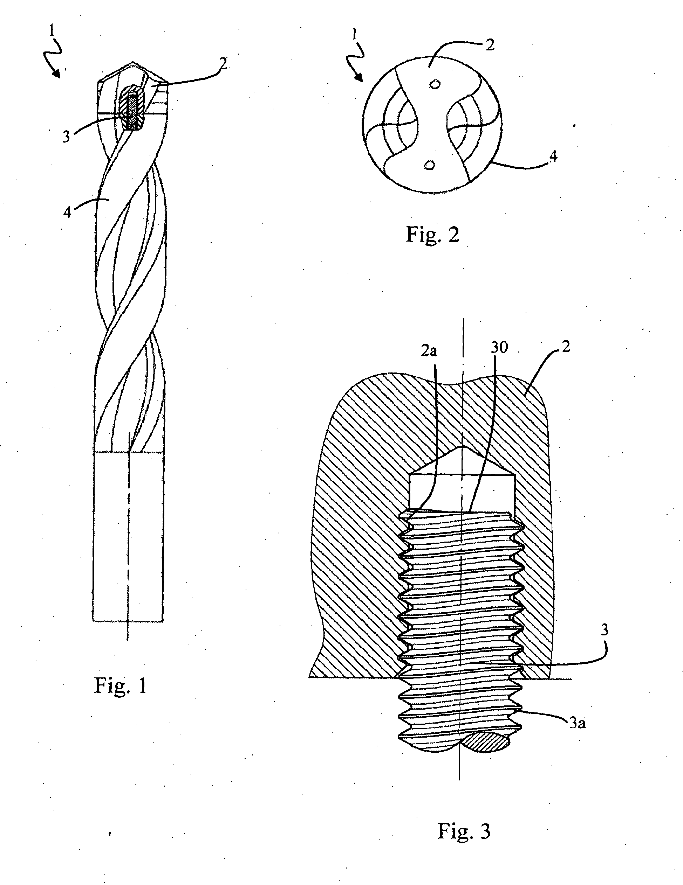

Eine Ausführungsform wird im Folgenden unter Bezug auf die Fig. 1 bis Fig. 4 beschrieben.

Bei der Ausführungsform ist die Hartwerkstoff-Gewindeverbindung bei einem Werkzeug 1 mit einem Bauteil 2, das einen Hartwerkstoff aufweist, und einer Komponente 3 mit größerer Elastizität realisiert. Die Komponente 3 mit größerer Elastizität kann z.B. insbesondere aus Stahl gefertigt sein. Bei der in den Figuren dargestellten Ausführungsform ist das Werkzeug 1 durch einen Bohrer mit einer auswechselbaren Schneide aus einem Hartwerkstoff gebildet. In diesem Fall ist das Bauteil 2, das einen Hartwerkstoff aufweist, durch die auswechselbare Schneide gebildet, die als Schneidkopf ausgebildet ist. Bei der in den Fig. 1 bis Fig. 4 dargestellten Ausführungsform ist die Komponente 3 mit größerer Elastizität durch einen separaten Gewindekörper gebildet, der mit einem Werkzeugkörper 4 verbunden ist. Es ist jedoch z.B. auch möglich, dass die Komponente mit größerer Elastizität direkt durch einen Werkzeugkörper gebildet ist, der mit einem Gewindeabschnitt versehen ist.

Bei dem Ausführungsbeispiel ist der Werkzeugkörper 4 in an sich bekannter Weise aus Werkzeugstahl gefertigt und mit spiralförmigen Spannuten versehen. Das Bauteil 2, das als auswechselbarer Schneidkopf realisiert ist, ist derart ausgebildet, dass es über eine Hartwerkstoff-Gewindeverbindung, die im Folgenden eingehender beschrieben wird, an dem Werkzeugkörper 4 befestigbar ist. Bei dem dargestellten Ausführungsbeispiel ist die Komponente 3 z.B. über eine Schraubverbindung fest mit dem Werkzeugkörper 4 verbunden. Die Komponente 3 kann dabei insbesondere ebenfalls aus einem Werkzeugstahl gebildet sein.

Das Bauteil 2 (d.h. die auswechselbare Schneide bei der Ausführungsform) ist mit einem ersten Gewindeabschnitt 2a versehen und die Komponente 3 mit größerer Elastizität (d.h. der Gewindekörper bei der Ausführungsform) ist mit einem zweiten Gewindeabschnitt 3a versehen. Der erste Gewindeabschnitt 2a ist in dem Hartwerkstoff des Bauteils 2 ausgebildet. Der zweite Gewindeabschnitt 3a ist in dem Material größerer Elastizität der Komponente 3 ausgebildet. Der Hartwerkstoff weist aufgrund seiner großen Härte eine relativ geringe Elastizität auf, wohingegen die Komponente 3 und der Werkzeugkörper 4 eine wesentlich geringere Härte und eine größere Elastizität aufweisen.

Bei der dargestellten Ausführungsform ist der erste Gewindeabschnitt 2a als Innengewinde aus dem Hartwerkstoff ausgebildet. Der zweite Gewindeabschnitt 3a ist als Außengewinde an der Komponente 3 ausgebildet. Obwohl diese Ausgestaltung bevorzugt ist, ist es jedoch z.B. auch möglich, den ersten Gewindeabschnitt als Außengewinde aus Hartwerkstoff auszubilden und den zweiten Gewindeabschnitt als Innengewinde.

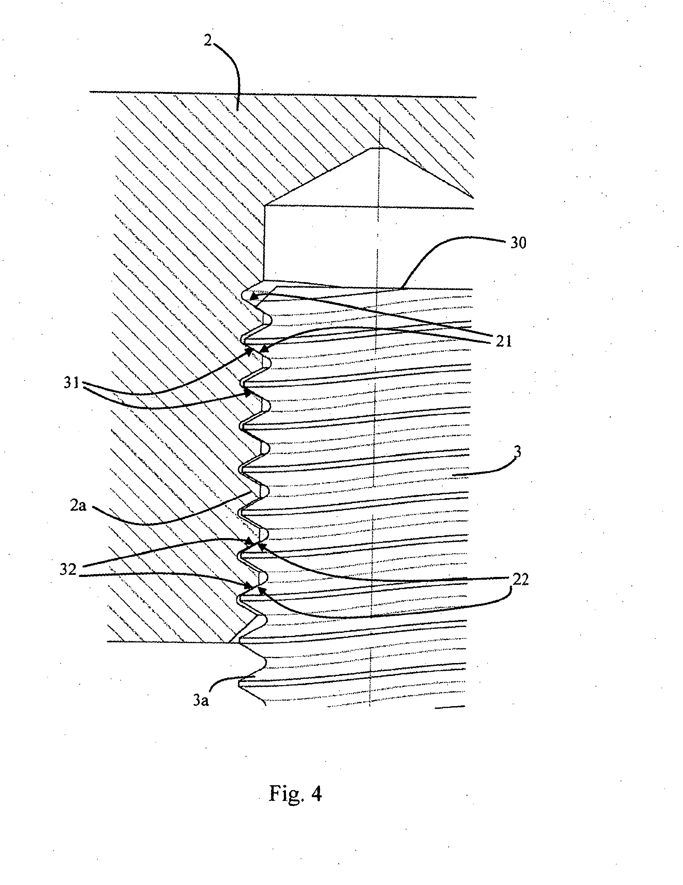

Der erste Gewindeabschnitt 2a und der zweite Gewindeabschnitt 3a sind dazu ausgebildet, zur Ausbildung einer Hartwerkstoff-Gewindeverbindung zusammenzuwirken. Dabei weisen der erste Gewindeabschnitt 2a und der zweite Gewindeabschnitt 3a jedoch eine unterschiedliche Gewindesteigung auf, wie im Folgenden unter Bezug auf die Fig. 3 und Fig. 4 eingehender beschrieben wird.

Bei dem Ausführungsbeispiel ist der zweite Gewindeabschnitt 3a als Normgewinde (z.B. als metrisches ISO-Gewinde) ausgeführt. Der in dem Hartwerkstoff ausgebildete erste Gewindeabschnitt 2a ist hingegen mit einer von der Norm abweichenden Gewindesteigung ausgebildet. Der erste Gewindeabschnitt 2a weist dabei eine zwischen 2,1 % und 8 % von dem zweiten Gewindeabschnitt 3a (und damit von der Norm) abweichende Gewindesteigung auf. Bei dem Ausführungsbeispiel weist der erste Gewindeabschnitt 2a eine Gewindesteigung auf, die um 3% von der Gewindesteigung des zweiten Gewindeabschnitts 3a abweicht. Dabei weist der als Innengewinde ausgebildete erste Gewindeabschnitt 2a eine größere Gewindesteigung auf, als der aus Außengewinde ausgebildete zweite Gewindeabschnitt 3a.

Der mit diesem Unterschied in der Gewindesteigung erzielte Effekt wird im Folgenden unter Bezug auf Fig. 4 eingehender erläutert. Fig. 4 zeigt die Gewindegänge der Hartwerkstoff-Gewindeverbindung in vergrößerter Darstellung, sodass die einzelnen Flanken des Innengewindes und des Außengewindes zu erkennen sind. Fig. 4 ist eine Darstellung der Hartwerkstoff-Gewindeverbindung in einem vollständig eingeschraubten Zustand.

Wie in Fig. 4 zusehen ist, liegen nahe an einem freien Ende 30 des zweiten Gewindeabschnitts 3a (oben in Fig. 3) die von dem freien Ende 30 abgewandten Gewindeflanken 31 des zweiten Gewindeabschnitts 3a an den korrespondierenden, dem freien Ende 30 zugewandten Gewindeflanken 21 des als Innengewinde ausgebildeten ersten Gewindeabschnitts 2a an. In dem von dem freien Ende 30 abgewandten Bereich der Hartwerkstoff-Gewindeverbindung, d.h. nahe der Oberfläche des Bauteils 2 (unten in Fig. 3), liegen die dem freien Ende 30 zugewandten Gewindeflanken 32 des zweiten Gewindeabschnitts 3a an den korrespondierenden, von dem freien Ende 30 abgewandten Gewindeflanken 22 des ersten Gewindeabschnitts 2a an.

Im Ergebnis liegt damit im zusammengeschraubten Zustand eine leichte Vorspannung an dem Außengewinde an, sodass die Flanken des Außengewindes nahe dem freien Ende auf Zug anliegen und die Flanken des Außengewindes entfernt von dem freien Ende auf Druck anliegen.

Durch diese Ausgestaltung werden bei einer Zugbelastung der Hartwerkstoff-Gewindeverbindung bzw. des als Außengewinde ausgebildeten Gewindeabschnitts bei einer kleinen Zugbelastung zunächst die in dem Innengewinde weit innen liegenden Gewindegänge (d.h. nahe dem freien Ende des Außengewindes) belastet und bei zunehmender Zugbelastung und Dehnung des Körpers, der das Außengewinde aufweist, auch die weiter außen liegenden Gewindegänge (entfernt von dem freien Ende des Außengewindes).

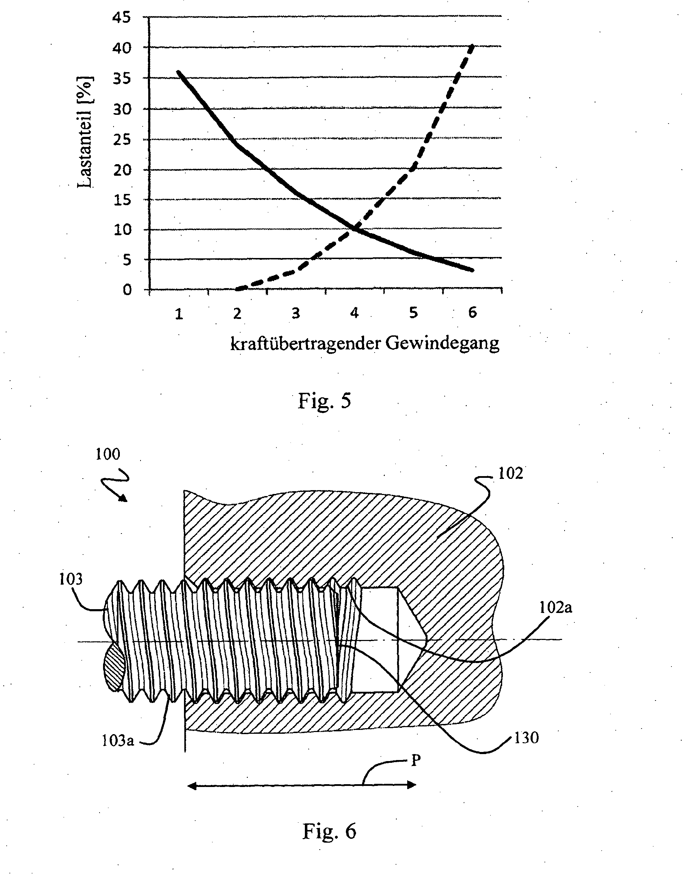

Zum Vergleich ist in Fig. 6 eine herkömmliche Hartwerkstoff-Gewindeverbindung 100 dargestellt, bei der sowohl der in dem Hartwerkstoff 102 ausgebildete erste Gewindeabschnitt 102a als auch der an der Komponente 103 mit größerer Elastizität ausgebildete zweite Gewindeabschnitt 103a als Normgewinde ausgebildet sind. Bei dieser herkömmlichen Ausgestaltung werden bei einer Zugbelastung der Hartwerkstoff-Gewindeverbindung (schematisch durch einen Doppelpfeil P dargestellt) hauptsächlich die von dem freien Ende 130 entfernten Gewindegänge nahe der Oberfläche des Bauteils aus Hartwerkstoff 102 belastet, was mit zunehmender Zugbelastung zunimmt. Dadurch besteht die Gefahr, dass diese Gewindegänge ausbrechen. Bei hohen Belastungsspitzen kann dies durch Rissausbildung zu Abplatzungen oder einer Zerstörung des gesamten Bauteils aus Hartwerkstoff führen.

Die Vorteile der erfindungsgemäßen Hartwerkstoff-Gewindeverbindung gegenüber einer herkömmlichen Hartwerkstoff-Gewindeverbindung, bei der sowohl der erste Gewindeabschnitt als auch der zweite Gewindeabschnitt als Normgewinde ausgebildet sind, werden im Folgenden unter Bezug auf die

Fig. 5 eingehender beschrieben. In Fig. 5 ist am Beispiel eines sechsgängigen Gewindes dargestellt, welcher Lastanteil in % auf die jeweiligen kraftübertragenden Gewindegänge entfällt, und zwar einerseits für eine herkömmliche Hartwerkstoff-Gewindeverbindung 100 (durchgezogene Linie) und andererseits bei der Hartwerkstoff-Gewindeverbindung gemäß der Ausführungsform (gestrichelte Linie). Die kraftübertragenden Gewindegänge sind dabei ausgehend von der Oberfläche des Hartwerkstoffs durchnummeriert, d.h. der Gewindegang Nr. 1 befindet sich nahe der Oberfläche des Hartwerkstoffs und der Gewindegang Nr. 6 befindet sich nahe dem freien Ende des Außengewindes.

Wie in Fig. 5 zu sehen ist, tragen bei der herkömmlichen Hartwerkstoff-Gewindeverbindung (durchgezogene Linie) die ersten Gewindegänge am meisten Last und die Gewindegänge in Richtung des freien Endes des Außengewindes zunehmend weniger Last. Im Gegensatz dazu tragen bei der Hartwerkstoff-Gewindeverbindung gemäß der Ausführungsform (gestrichelte Linie) hauptsächlich die Gewindegänge nahe dem freien Ende des Außengewindes die Last.

Die mit der Hartwerkstoff-Gewindeverbindung gemäß der Ausführungsform erzielten Vorteile werden auch aus der folgenden Beschreibung von Beispielen ersichtlich.

### Beispiele

Es wurden Versuche durchgeführt, bei denen jeweils in einem im Wesentlichen zylindrischen Bauteil aus Hartwerkstoff, insbesondere Hartmetall, Innengewinde mit unterschiedlicher Steigung mittels eines Helix-Fräsverfahrens ausgebildet wurden. Es wurde jeweils eine Gewindeverbindung mit einer Stahlschraube (Schraubengüte 8.8 phosphatiert) mit einem metrischen M6 ISO-Gewinde (Steigung 1,000 mm) ausgebildet, mit 15 mm Gewindetiefe. Die Streckgrenze der Schraube wurde bei einer Zugkraft von 12864 N erreicht, ein Bruch trat bei 16080 N ein.
Bei Probe 1 wurde in dem Hartwerkstoff ein unmodifiziertes M6 ISO-Gewinde (Steigung 1,000 mm) ausgebildet.

Bei Probe 2 wurde in dem Hartwerkstoff ein M6-Gewinde mit einer gegenüber dem Normgewinde um 1% erhöhten Gewindesteigung (Steigung 1,010 mm) ausgebildet.

Bei Probe 3 wurde in dem Hartwerkstoff ein M6-Gewinde mit einer gegenüber dem Normgewinde um 2% erhöhten Gewindesteigung (Steigung 1,020 mm) ausgebildet.

Bei Probe 4 wurde in dem Hartwerkstoff ein M6-Gewinde mit einer gegenüber dem Normgewinde um 3% erhöhten Gewindesteigung (Steigung 1,030 mm) ausgebildet.

Bei Probe 5 wurde in dem Hartwerkstoff ein M6-Gewinde mit einer gegenüber dem Normgewinde um 4% erhöhten Gewindesteigung (Steigung 1,040 mm) ausgebildet.

Beim Ausbilden der Hartwerkstoff-Gewindeverbindung konnten die Proben 1 bis 3 von Hand eingedreht werden, bei den Proben 4 und 5 war zum Einschrauben aufgrund der resultierenden Vorspannung bereits ein Werkzeug erforderlich. Alle Proben wurden auf einer hydraulischen Presse bis über die Streckgrenze der Schraube belastet. Es wurde beobachtet, bei welcher Belastung die ersten Gewindegänge ausbrechen.

### Ergebnisse

Bei Probe 1 konnte bereits bei einer Zugkraft von ca. 4000 N ein Knacken vernommen werden und es entstand eine ringförmige Abplatzung. Bei Probe 2 trat bei einer Zugkraft von ca. 10000 N eine Zerstörung des Bauteils aus Hartwerkstoff ein. Bei den Proben 4 und 5 konnte hingegen bis zur Erreichung der Bruchlast der Schraube kein Ausbruch von Gewindegängen in dem Bauteil aus Hartwerkstoff mehr beobachtet werden.

### Weiterbildung

Gemäß einer Weiterbildung der Ausführungsform ist das Bauteil 2 wiederum mit einem als Innengewinde ausgebildeten ersten Gewindeabschnitt versehen. Im Unterschied zu der zuvor beschriebenen Ausführungsform ist bei der Weiterbildung der erste Gewindeabschnitt mit einer schrägen Ansenkung derart versehen, dass der erste Gewindegang des Innengewindes nicht unmittelbar an der Oberfläche des Bauteils aus Hartwerkstoff beginnt, sondern mit einem vorgegebenen räumlichen Abstand von der Oberfläche. Somit ist das Innengewinde gegenüber der Oberfläche vertieft angesetzt. In dieser Weise kann die Stabilität des in dem Hartwerkstoff ausgebildeten ersten Gewindeabschnitts zusätzlich erhöht werden.

Obwohl in Bezug auf die Ausführungsform ein Bauteil 2 beschrieben wurde, das vollständig aus Hartwerkstoff gebildet ist, ist es z.B. auch möglich, dass das Bauteil 2 nur bereichsweise aus Hartwerkstoff gebildet ist. Auch in diesem Fall ist der erste Gewindeabschnitt 2a in einem aus Hartwerkstoff gebildeten Bereich des Bauteils 2 ausgebildet.

Obwohl in Bezug auf die Ausführungsform beschrieben wurde, dass die Hartwerkstoff-Gewindeverbindung bei einem Werkzeug in Form eines Bohrers zum Einsatz kommt, sind auch andere Anwendungen möglich, bei denen ein Bauteil aus einem Hartwerkstoff über eine Gewindeverbindung mit einem Material geringerer Elastizität verbunden wird, insbesondere (aber nicht nur) Anwendungen bei anderen Werkzeugen, insbesondere zerspanenden Werkzeugen.

## Patentansprüche

1. Hartwerkstoff-Gewindeverbindung mit
einem Bauteil (2), das einen Hartwerkstoff und einen in dem Hartwerkstoff ausgebildeten ersten Gewindeabschnitt (2a) aufweist, und
einer Komponente (3) mit größerer Elastizität, die einen mit dem ersten Gewindeabschnitt (2a) zusammenwirkenden,
zweiten Gewindeabschnitt (3a) aufweist,
**dadurch gekennzeichnet, dass** der erste Gewindeabschnitt (2a) und der zweite Gewindeabschnitt (3a) eine unterschiedliche Gewindesteigung aufweisen.

2. Hartwerkstoff-Gewindeverbindung nach Anspruch 1, **dadurch gekennzeichnet, dass** der Unterschied in der Gewindesteigung mehr als 1,5 %, bevorzugt mehr als 2 %, beträgt.

3. Hartwerkstoff-Gewindeverbindung nach Anspruch 1 oder 2, **dadurch gekennzeichnet, dass** der Unterschied in der Gewindesteigung zwischen 2,1 % und 8 % beträgt.

4. Hartwerkstoff-Gewindeverbindung nach einem der vorhergehenden Ansprüche, **dadurch gekennzeichnet, dass** der erste Gewindeabschnitt (2a) ein Innengewinde ist.

5. Hartwerkstoff-Gewindeverbindung nach einem der vorhergehenden Ansprüche, **dadurch gekennzeichnet, dass** der als Innengewinde ausgebildete Gewindeabschnitt eine größere Steigung aufweist, als der als Außengewinde ausgebildete Gewindeabschnitt.

6. Hartwerkstoff-Gewindeverbindung nach einem der vorhergehenden Ansprüche, **dadurch gekennzeichnet, dass** der zweite Gewindeabschnitt (3a) ein Normgewinde ist und der erste Gewindeabschnitt (2a) eine von der Norm abweichende Gewindesteigung aufweist.

7. Hartwerkstoff-Gewindeverbindung nach einem der vorhergehenden Ansprüche, **dadurch gekennzeichnet, dass** der als Innengewinde ausgebildete Gewindeabschnitt derart mit einer Ansenkung versehen ist, dass das Innengewinde gegenüber einer Oberfläche vertieft angesetzt ist.

8. Hartwerkstoff-Gewindeverbindung nach einem der vorhergehenden Ansprüche, **dadurch gekennzeichnet, dass** das Bauteil (2), das den Hartwerkstoff aufweist, eine auswechselbare Schneide, insbesondere ein Schneidkopf ist.

9. Hartwerkstoff-Gewindeverbindung nach einem der vorhergehenden Ansprüche, **dadurch gekennzeichnet, dass** der Hartwerkstoff Hartmetall oder Cermet ist.

10. Verfahren zum Ausbilden einer Gewindeverbindung zwischen Hartwerkstoff und einer Komponente (3) mit größerer Elastizität, das aufweist:
Verschrauben eines Bauteils (2), das einen Hartwerkstoff und einen in dem Hartwerkstoff ausgebildeten ersten Gewindeabschnitt (2a) aufweist,
mit einer Komponente (3) mit größerer Elastizität, die einen zweiten Gewindeabschnitt (3a) aufweist, der mit dem ersten Gewindeabschnitt (2a) unter Ausbildung einer Gewindeverbindung zusammenwirkt,
**dadurch gekennzeichnet, dass** der erste Gewindeabschnitt (2a) und der zweite Gewindeabschnitt (3a) eine unterschiedliche Gewindesteigung aufweisen.

11. Verfahren nach Anspruch 10, **dadurch gekennzeichnet, dass** der erste Gewindeabschnitt (2a) ein Innengewinde ist und der zweite Gewindeabschnitt (3a) ein Außengewinde ist.

12. Verfahren nach Anspruch 10 oder 11, **dadurch gekennzeichnet, dass** der zweite Gewindeabschnitt (3a) ein Normgewinde ist und der erste Gewindeabschnitt (2a) eine von der Norm abweichende Gewindesteigung aufweist.

13. Verwendung einer Hartwerkstoff-Gewindeverbindung nach einem der Ansprüche 1 bis 9 zur Befestigung einer Schneide, insbesondere eines Schneidkopfes, an einem Werkzeugkörper (4).

## Claims

1. A hard-material threaded connection with a structural part (2), which has a hard material and a first threaded portion (2a) formed in the hard material, and a component (3) having higher elasticity, which has a second threaded portion (3a) cooperating with the first threaded portion (2a), **characterized in that** the first threaded portion (2a) and the second threaded portion (3a) have a different thread pitch.

2. The hard-material threaded connection as claimed in claim 1, **characterized in that** the difference in the thread pitch amounts to more than 1.5%, preferably to more than 2%.

3. The hard-material threaded connection as claimed in claim 1 or 2, **characterized in that** the difference in the thread pitch amounts to between 2.1% and 8%.

4. The hard-material threaded connection as claimed in one of the preceding claims, **characterized in that** the first threaded portion (2a) is an internal thread.

5. The hard-material threaded connection as claimed in one of the preceding claims, **characterized in that** the threaded portion designed as an internal thread has a higher pitch than the threaded portion designed as an external thread.

6. The hard-material threaded connection as claimed in one of the preceding claims, **characterized in that** the second threaded portion (3a) is a standard thread and the first threaded portion (2a) has a thread pitch deviating from the standard.

7. The hard-material threaded connection as claimed in one of the preceding claims, **characterized in that** the threaded portion designed as an internal thread is provided with a countersink in such a way that the internal thread is applied so as to be recessed with respect to a surface.

8. The hard-material threaded connection as claimed in one of the preceding claims, **characterized in that** the structural part (2) which has the hard material is an exchangeable cutter, in particular a cutting head.

9. The hard-material threaded connection as claimed in one of the preceding claims, **characterized in that** the hard material is hardmetal or cermet.

10. A method for forming a threaded connection between hard material and a component (3) having higher elasticity, which comprises:
screwing of a structural part (2), which has a hard material and a first threaded portion (2a) formed in the hard material, to a component (3) having higher elasticity, which has a second threaded portion (3a) which cooperates with the first threaded portion (2a), thereby forming a threaded connection,
**characterized in that** the first threaded portion (2a) and the second threaded portion (3a) have a different thread pitch.

11. The method as claimed in claim 10, **characterized in that** the first threaded portion (2a) is an internal thread and the second threaded portion (3a) is an external thread.

12. The method as claimed in claim 10 or 11, **characterized in that** the second threaded portion (3a) is a standard thread and the first threaded portion (2a) has a thread pitch deviating from the standard.

13. A use of a hard-material threaded connection as claimed in one of claims 1 to 9 for fastening a cutter, in particular a cutting head, to a tool body (4).

## Revendications

1. Jonction filetée à matériau dur constituée d'une pièce (2) incluant un matériau dur et une première section filetée (2a) réalisée dans ledit matériau dur, et d'un composant (3) de plus grande élasticité incluant une seconde section filetée (3a) coopérant avec la première (2a), **caractérisée en ce que** la première section filetée (2a) et la seconde section filetée (3a) présentent un pas de filetage différent.

2. Jonction filetée à matériau dur selon la revendication 1, **caractérisée en ce que** la différence de pas de filetage est supérieure à 1,5 pour cent, de préférence supérieure à 2 pour cent.

3. Jonction filetée à matériau dur selon la revendication 1 ou 2, **caractérisée en ce que** la différence de pas de filetage est comprise entre 2,1 pour cent et 8 pour cent.

4. Jonction filetée à matériau dur selon l'une quelconque des revendications précédentes, **caractérisée en ce que** la première section filetée (2a) est un filetage femelle.

5. Jonction filetée à matériau dur selon l'une quelconque des revendications précédentes, **caractérisée en ce que** la section filetée femelle présente un pas plus grand que la section filetée mâle.

6. Jonction filetée à matériau dur selon l'une quelconque des revendications précédentes, **caractérisée en ce que** la seconde section filetée (3a) est un filetage normalisé et **en ce que** la première section filetée (2a) présente un pas de filetage s'écartant de la norme.

7. Jonction filetée à matériau dur selon l'une quelconque des revendications précédentes, **caractérisée en ce que** la section filetée femelle est chanfreinée de façon telle que le filetage femelle est disposé en retrait par rapport à une surface supérieure.

8. Jonction filetée à matériau dur selon l'une quelconque des revendications précédentes, **caractérisée en ce que** la pièce (2) incluant le matériau dur est une lame de coupe interchangeable, en particulier une tête de coupe.

9. Jonction filetée à matériau dur selon l'une quelconque des revendications précédentes, **caractérisée en ce que** le matériau dur est du métal dur ou du cermet.

10. Méthode de réalisation d'une jonction filetée entre un matériau dur et un composant (3) de plus grande élasticité, par assemblage vissé d'une pièce (2) incluant un matériau dur et une première section filetée (2a) réalisée dans ledit matériau dur, avec un composant (3) de plus grande élasticité incluant une seconde section filetée (3a) coopérant avec la première (2a) en formant ladite jonction filetée, **caractérisée en ce que** la première section filetée (2a) et la seconde section filetée (3a) présentent un pas de filetage différent.

11. Méthode selon la revendication 10, **caractérisée en ce que** la première section filetée (2a) est un filetage femelle et **en ce que** la seconde section filetée (3a) est un filetage mâle.

12. Méthode selon la revendication 10 ou 11, **caractérisée en ce que** la seconde section filetée (3a) est un filetage normalisé et **en ce que** la première section filetée (2a) présente un pas de filetage s'écartant de la norme.

13. Mise en oeuvre d'une jonction filetée à matériau dur selon l'une quelconque des revendications 1 à 9, afin de fixer une lame de coupe, en particulier une tête de coupe, sur un corps d'outil (4).
